# EUROPEAN PATENT SPECIFICATION

(11) **EP 1 380 381 B1**
(45) Date of publication and mention of the grant of the patent: **06.04.2005**
(21) Application number: 03015539.4
(22) Date of filing: 10.07.2003
(51) Int. Cl.: B23K 35/30, C22C 19/05

(54) **Nickel based filler metal for brazing**
Hartlötzusatzmetalle auf Nickelbasis
Métaux d'apport à base de nickel pour brasage

(30) Priority: 11.07.2002 JP 2002203135
(43) Date of publication of application: 14.01.2004
(73) Proprietor: Japan Aerospace Exploration Agency, Tokyo 105-8260 (JP); The Japan Welding Engineering Society, Tokyo 101-0025 (JP)
(72) Inventor: Shirai, Makoto, Japan Aerospace Exploration Agency, Chofu-shi Tokyo 105-8260 (JP); Sasabe, Ken, Japan Aerospace Exploration Agency, Chofu-shi, Tokyo 105-8260 (JP); Watanabe,Takehiko,The Japan Welding Engineering So, Chiyoda-ku, Tokyo 101-0025 (JP)
(74) Representative: HOFFMANN - EITLE

(56) References cited:
- GB-A- 1 462 510
- US-A- 2 923 621
- US-B1- 6 257 882
- LUGSCHEIDER E ET AL: "Development of Nickel-Chromium-Silicon Base Filler Metals" WELDING JOURNAL, AMERICAN WELDING SOCIETY. MIAMI, US, vol. 57, no. 10, October 1978 (1978-10), pages 3195-3235-323s, XP002129641 ISSN: 0043-2296

## Description

### BACKGROUND OF THE INVENTION

The present invention relates to nickel based filler metal to braze various kinds of heat-resistant alloys and corrosion resistant alloys.

Conventionally, nickel brazing filler metals, silver brazing filler metals, copper brazing filler metals or the like has been used for brazing heat resistant alloys or corrosion resistant alloys. Of these brazing filler metals, the brazed region of the silver filler metal or the copper filler metal is inferior in the joint strength, the heat-resistance and the corrosion resistance and is not suitable for the application that requires the performance which is substantially the same as that of the base material. On the other hand, the brazing portion of the nickel brazing filler metal is superior in the heat-resistance, the corrosion resistance and the joint strength. The nickel brazing filler metals generally used are Ni-B-Si system alloy, Ni-Si system alloy, Ni-P system alloy or the like. Table 1 shows compositions, melting points and brazing temperatures of typical nickel filler metals standardized by JIS (Japanese Industrial Standards).

**Table 1**

| | Chemical composition (% by weight) | | | | | | Solidus (C°) | Liquidus (C°) | Brazing temp (C°) |
|---|---|---|---|---|---|---|---|---|---|
| | Ni | Cr | B | Si | Fe | P | | | |
| BNi-1 (Ni-B-Si system) | Balance | 13-15 | 2.75-3.5 | 4-5 | 4-5 | - | 975 | 1040 | 1065 -1205 |
| BNi-5 (Ni-Si system) | Balance | 18-19.5 | - | 9.75-10.5 | - | - | 1080 | 1135 | 1150-1205 |
| BNi-7 (Ni-P system) | Balance | 13-15 | - | - | - | 9.7-10.5 | 890 | 890 | 925-1040 |

As is apparent from the above-listed table, boron (B), phosphorus (P) or a large amount of silicon (Si) (about 10% by wt. in BNi-5) is added to the nickel filler metal as a melting point depression element. It is known that the melting point depression element such as B or P forms in a brazed layer a hard and brittle compound such as boride or phosphide and also the brazing filler metals containing a large amount of Si forms a hard and brittle silicate in the brazed layer. When such a compound is formed in the brazed layer, the bonding portion is brittle, resulting in remarkable deterioration in mechanical strength or toughness of the brazed joint. In particular, as a result, when the gap of the brazing is large in physical size, such the compound is likely to be formed so that the mechanical characteristics of the brazed joint are largely deteriorated.

### SUMMARY OF THE INVENTION

An object of the present invention is to provide nickel based filler metal which does not contain at all B or P that is likely to form a hard and brittle compound in the brazed layer and in which the liquidus is lowered below 1,100 °C by adding a small amount of Si.

This object is attained by a brazing filler metal to which a small amount of silicon and manganese are added as a melting point depression elements, i.e., to provide a filler metal containing silicon (Si) of 5 to 7% by wt., chrome (Cr) of 16 to 21% by wt. and manganese (Mn) of 13 to 20% by wt. and the balance consisting of nickel (Ni) and the inevitable impurities.

It should be also noted that the addition of Mn leads not only to a depression of the melting point but also to the additional effects to increase the wettability and to improve the brazing characteristics. Also, the addition of Cr is to improve in the heat-resistance and the corrosion resistance.

### BRIEF DESCRIPTION OF THE DRAWINGS

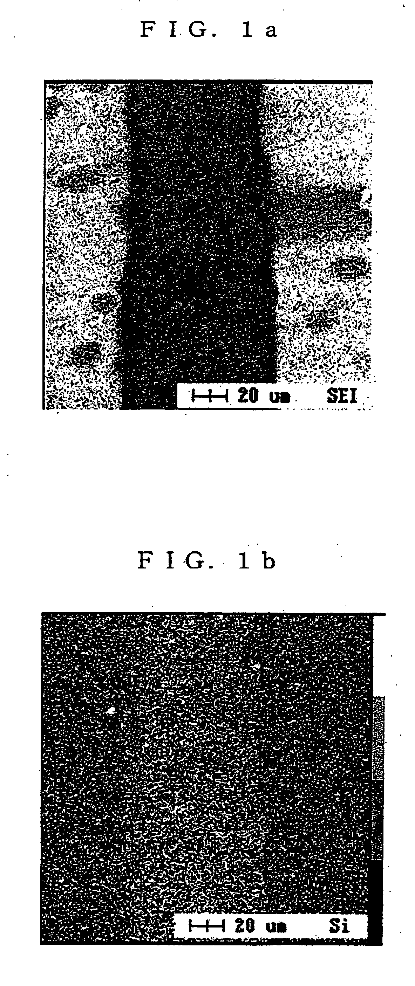

Fig. 1a is a scanning electron microscope image of a brazed layer of a SUS304 stainless steel brazed at the brazing gap of 100µm with the filler metal of 60% Ni-20% Cr-14%Mn-6%Si.
Fig. 1b is a distribution image of Si by EDS.

### DETAILED DESCRIPTION OF THE INVENTION

The conventional filler metal such as those shown in Table 1 has been used only in the form of powder because the conventional material is very brittle. However, the nickel based filler metal according to the present invention has the ductility so that it may be machined into a sheet or a wire. Accordingly, the subject filler metal having high heat-resistance and corrosion resistance may be used for the purpose of brazing of heat resisting alloys and corrosion resisting alloys in the form of a sheet or a wire.

### EXAMPLES

Butt joint of stainless steel (SUS304) round bars were brazing with the filler metal according to the present invention. The sheet of filler metal was put between the bonding surfaces and brazed under the vacuum condition of 1x10⁻² Pa. The brazing temperature was 1130°C and the brazing time was ten minutes. The brazing gap was 50µm. The tensile strength of the joint was measured by the tensil test.

Table 2 shows the tensile strength of the brazed joint and the solidus and the liquidus of the filler metal 1 according to the present invention. For reference, the tensile strength of the brazed joint using the conventional nickel filletr metal BNi-5 is shown together.

**Table 2**

| | Chemical composition (% by weight) | | | | Solidus (C°) | Liquidus (C°) | Tensile strength of joint (MPa) |
|---|---|---|---|---|---|---|---|
| | Ni | Cr | Mn | Si | | | |
| 1 | Balance | 20 | 14 | 6 | 1070 | 1080 | 580 |
| BNi-5 | Balance | 19 | - | 10 | 1080 | 1135 | 300 |

As has been apparent from Table 2, the liquidus of the filler metal 1 according to the present invention was 1080 °C, and the tensile strength of the brazed joint with this filler metal was substantially the same as that of the base material and was about twice higher than that of the joint with BNi-5.

Also, the brittle phase was locally present continuously in the middle portion of the brazed layer of the conventional nickel filler metal as shown in Table 1 but the presence of the brittle phase was scarcely found in the brazed layer of the filler metal 1 according to the present invention and was dispersed.

Furthermore, even if the brazing gap was so wide as 100µm in the case of filler metal 1 according to the present invention, the segregation of the brittle phase was not shown. Fig. 1a shows a scanning electron micrograph image of the brazed layer in this case, Fig. 1b shows distribution image of silicon (Si). It is understood that there is no segregation of Si in the brazed layer and the local presence of the brittle phase such as the silicate.

As described above, with the nickel based filler metal containing Si of 5 to 7% by wt., Mn of 13 to 20% by wt., Cr of 16 to 21% by wt. and the balance consisting of Ni and inevitable impurities, it is possible to produce the brazing filler metal having the ductility in the form of a sheet or a wire. The tensile strength of the brazed joint using this filler metal is substantially the same tensile strength as that of the base metal.

## Claims

1. A nickel based brazing filler metal **characterized by** containing chrome (Cr) of 16 to 21% by wt., manganese (Mn) of 13 to 20% by wt. and silicon (Si) of 5 to 7% by wt. and the balance consisting of nickel (Ni) and the impurities.

## Patentansprüche

1. Hartlotfüllstoffmetall auf Nickelbasis, **dadurch gekennzeichnet, dass** es 16-21 Gew.% Chrom (Cr), 13-20 Gew.% Mangan (Mn) und 5-7 Gew.% Silicium (Si), und als Rest Nickel (Ni) und Verunreinigungen enthält.

## Revendications

1. Métal d'apport à base de nickel pour brasage **caractérisé en ce qu'**il contient du chrome (Cr) de 16 à 21 % en poids, du manganèse (Mn) de 13 à 20 % en poids, et du silicium (Si) de 5 à 7 % en poids et le reste étant constitué de nickel (Ni) et des impuretés.
